# EUROPÄISCHE PATENTSCHRIFT

(11) **EP 2 994 645 B1**
(45) Veröffentlichungstag und Bekanntmachung des Hinweises auf die Patenterteilung: **31.05.2017**
(21) Anmeldenummer: 14723386.0
(22) Anmeldetag: 29.04.2014
(51) Int. Cl.: F04D 13/06, F04D 29/044, F16D 3/64

(54) **MAGNETPUMPENANORDNUNG**
PUMP ARRANGEMENT WITH MAGNETIC COUPLING
AGENCEMENT DE POMPE À ACCOUPLEMENT MAGNÉTIQUE

(30) Priorität: 08.05.2013 DE 102013208476
(43) Veröffentlichungstag der Anmeldung: 16.03.2016
(73) Patentinhaber: KSB Aktiengesellschaft, 67227 Frankenthal (DE)
(72) Erfinder: GRÖSCHEL, Jürgen, 67227 Frankenthal (DE)
(86) Internationale Anmeldenummer: PCT/EP2014/058680
(87) Internationale Veröffentlichungsnummer: WO 2014/180708

(56) Entgegenhaltungen:
- EP-A1- 1 746 290
- WO-A1-2005/017362
- WO-A2-2011/154783
- DE-U1- 8 436 638
- DE-U1- 9 000 501

## Beschreibung

Die Erfindung betrifft eine Magnetkupplungspumpenanordnung, mit einem von einem Pumpengehäuse der Pumpenanordnung gebildeten Innenraum, einem Spalttopf, der eine von ihm umschlossene Kammer hermetisch gegenüber dem vom Pumpengehäuse gebildeten Innenraum abdichtet, einer um eine Drehachse drehbar antreibbaren Laufradwelle, einem an einem Ende der Laufradwelle angeordneten Laufrad, einem an dem anderen Ende der Laufradwelle angeordneten Innenrotor, einem Antriebsmotor, einer von dem Antriebsmotor drehbar um die Drehachse antreibbare Antriebswelle und einem auf der Antriebswelle angeordneten, mit dem Innenrotor zusammenwirkenden Außenrotor, wobei der Außenrotor eine Nabe mit einer durch eine Durchgangsbohrung gebildeten Nabeninnenfläche aufweist, in der eine sich parallel zur Drehachse erstreckende und mit einer in einer Passfedernut der Antriebswelle eingesetzten Passfeder zusammenwirkende Axialnut ausgebildet ist.

Aus der DE 84 36 638 U1 ist eine derartige Pumpenanordnung bekannt. Trotz eines strengen Schiebesitzes des Außenmagnetträgers auf die Antriebswelle, bewirkt das noch vorhandene Passungsspiel ein Kippen des Außenmagnetträgers in Bezug auf die Antriebswelle, wodurch beim drehenden Antreiben der Antriebswelle der Außenmagnetträger eine Taumelbewegung durchführt, die zu einer Beschädigung des Spalttopfes oder anderer Teile innerhalb der Pumpenanordnung führen kann. Wird der Passungssitz zu streng gewählt, ist eine Montage nur noch mit aufheizen und eine Demontage nur noch mit Spezialwerkzeug möglich.

Gleiches gilt für die in der WO 2011/154783 A2 gezeigte Peripheralpumpe, bei der die Drehmomentübertragung auf der angetriebenen Seite zwischen Laufrad und Laufradwelle und zwischen Innenrotor und Laufradwelle von einem Toleranzring übernommen werden kann.

Die DE 90 00 501 U1 offenbart für eine Welle-Nabe-Verbindung zwischen Pumpenrad und Antriebswelle den Einsatz eines Toleranzrings zur Übertragung des Drehmoments. Die Aufgabe der Erfindung besteht darin, eine Pumpenanordnung bereitzustellen, die eine spielfreie und ohne Spezialwerkzeuge durchführbare Montage des den Magnete tragenden Außenrotors auf die Antriebswelle eines Antriebsmotors ermöglicht, wobei ein Kippen des Außenrotors in Bezug auf die Antriebswelle vermieden bzw. reduziert wird.

Die Aufgabe der Erfindung wird dadurch gelöst, dass in der Nabeninnenfläche mindestens eine radial umlaufende erste Nut und mindestens eine radial umlaufende zweite Nut ausgebildet ist, wobei wenigstens in zwei der Nuten ein Toleranzring angeordnet ist.

Vorzugsweise ist in mindestens einer oder mehreren der ersten Nuten und in einer oder mehreren der zweiten Nuten ein Toleranzring angeordnet.

Zweckmäßigerweise ist in einer der ersten Nuten ein Toleranzring und in einer der zweiten Nuten ein Toleranzring angeordnet. Einer Ausgestaltung der Erfindung folgend wird vorgeschlagen, dass die Pumpenanordnung in einer Blockausführung ausgestaltet ist, das heißt, dass das Pumpengehäuse mit dem Motorgehäuse verbunden ist. Dadurch wird keine Grundplatte oder eine Grundplatte mit relativ geringer Größe für die Pumpenanordnung benötigt. Ferner kann auf eine mechanische Kupplung verzichtet werden. Zudem entfällt der ansonsten notwendige Ausrichtungsaufwand.

Ungünstige Rundlaufeigenschaften des über die Antriebswelle drehbar angetriebenen Außenrotors werden vermieden, wenn mindestens eine erste Nut in einem Bereich der Nabeninnenfläche ausgebildet ist, der sich in Axialrichtung im Wesentlichen zwischen der Mitte der Nabe und dem ersten Trägerelement befindet, und/oder mindestens eine zweite Nut in einem Bereich der Nabeninnenfläche ausgebildet ist, der sich im Wesentlichen von der Mitte der Nabe bis nahe an das dem ersten Trägerelement entgegengesetzte Ende der Nabe erstreckt.

Als besonders vorteilhaft hat sich eine Ausgestaltung erwiesen, wonach die Außenmantelfläche der Nabe glatt ausgebildet ist. Dadurch, dass auf Bohrungen, Unterbrechungen oder Schlitze in oder an der Außenmantelfläche der Nabe verzichtet wird, ist es möglich, den Außenrotor auf die Antriebswelle zu schieben, ohne dass in diesem Bereich angeordnete Dichtungselemente beschädigt werden.

Zu Gunsten einer einfachen Montage und Demontage von Nabe und Antriebswelle ist eine in dem Außenrotor im Bereich des ersten Trägerelements ausgebildete Gewindebohrung vorgesehen.

Bezüglich der einfachen Montage und Demontage von Nabe und Antriebswelle weist dabei die Gewindebohrung einen größeren Durchmesser auf, als ein in der Antriebswelle vorgesehenes Gewindesackloch.

In weiterer vorteilhafter Ausgestaltung sind die Toleranzringe derart bemessen, dass diese nicht in die die Passfeder aufnehmende Passfedernut hineinreichen.

Ausführungsbeispiele der Erfindung sind in den Zeichnungen dargestellt und werden im Folgenden näher beschrieben. Es zeigt die
- Fig. 1: den Längsschnitt durch eine Magnetkupplungspumpenanordnung mit einer erfindungsgemäßen Naben-Wellen-Verbindung, die
- Fig. 2: eine der Fig. 1 entsprechende Naben-Wellen-Verbindung in vergrößerter Darstellung, die
- Fig. 3: einen Schnitt entlang der Linie III-III aus Fig. 2, die
- Fig. 4: die Montage der Nabe auf die Welle und die
- Fig. 5: die Demontage der Nabe von der Welle

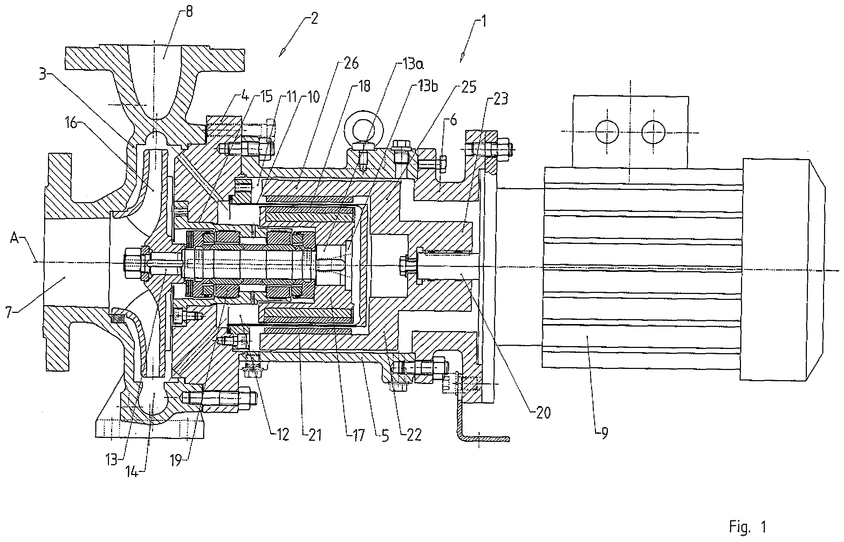

Die Fig. 1 zeigt eine Pumpenanordnung 1 in Form einer Magnetkupplungspumpenanordnung mit einem Pumpenteil und einem elektrischen Teil. Der Pumpenteil der Pumpenanordnung 1 weist ein mehrteiliges Pumpengehäuse 2 einer Kreiselpumpe auf, das ein als Spiralgehäuse gestaltetes Hydraulikgehäuse 3, einen Gehäusedeckel 4, eine Lagerträgerlaterne 5 und ein Verbindungselement 6 umfasst.

Das Hydraulikgehäuse 3 weist eine Einlassöffnung 7 zum Ansaugen eines Fördermediums und eine Auslassöffnung 8 zum Ausstoßen des Fördermediums auf. Der Gehäusedeckel 4 ist an der der Einlassöffnung 7 gegenüberliegende Seite des Hydraulikgehäuses 3 angeordnet. An der dem Hydraulikgehäuse 3 abgewandten Seite des Gehäusedeckels 4 ist die Lagerträgerlaterne 5 befestigt. Das Verbindungselement 6 ist an der dem Gehäusedeckel 4 gegenüberliegenden Seite der Lagerträgerlaterne 5 angebracht. An das Verbindungselement 6 ist an der der Lagerträgerlaterne 5 entgegengesetzten Seite ein den elektrischen Teil bildenden Antriebsmotor 9 angeordnet. Die Pumpenanordnung 1 ist in einer Blockausführung ausgestaltet, das heißt, dass das Pumpengehäuse 2 und das Gehäuse des Antriebsmotors 9 miteinander verbunden sind, beispielsweise mittels des Verbindungselements 6.

Ein Spalttopf 10 ist an der dem Hydraulikgehäuse 3 abgewandten Seite des Gehäusedeckels 4 befestigt und erstreckt sich zumindest teilweise durch einen vom Pumpengehäuse 2, insbesondere vom Gehäusedeckel 4, von der Lagerträgerlaterne 5 und von dem Verbindungselement 6 begrenzten Innenraum 11. Der Spalttopf 10 dichtet eine von ihm umschlossene Kammer 12 hermetisch gegenüber dem Innenraum 11 ab.

Eine um eine Drehachse A drehbare Laufradwelle 13 erstreckt sich von einer mittels des Hydraulikgehäuses 3 und des Gehäusedeckels 4 begrenzten Strömungskammer 14 durch eine in dem Gehäusedeckel 4 vorgesehene Öffnung 15 in die Kammer 12.

An einem innerhalb der Strömungskammer 14 liegenden Wellenende der Laufradwelle 13 ist ein Laufrad 16 befestigt, am gegenüberliegenden Wellenende, das zwei Wellenabschnitte 13a, 13b mit sich jeweils vergrößernden Durchmessern aufweist, ist ein innerhalb der Kammer 12 angeordneter Innenrotor 17 angeordnet. Der Innenrotor 17 ist mit mehreren Magneten 18 bestückt, die an der dem Spalttopf 10 zugewandten Seite des Innenrotors 17 angeordnet sind.

Zwischen Laufrad 16 und Innenrotor 17 ist eine mit der um die Drehachse A drehbar antreibbaren Laufradwelle 13 in Wirkverbindung stehende Lageranordnung 19 angeordnet.

Der Antriebsmotor 9 treibt eine Antriebswelle 20 an. Die um die Drehachse A antreibbare Antriebswelle 20 ist im Wesentlichen koaxial zur Laufradwelle 13 angeordnet. Die Antriebswelle 20 erstreckt sich in das Verbindungselement 6 und ggf. wenigstens teilweise in die Lagerträgerlaterne 5. Am freien Ende der Antriebswelle 20 ist ein mehrere Magnete 21 tragender Außenrotor 22 angeordnet. Die Magnete 21 sind an der dem Spalttopf 10 zugewandten Seite des Außenrotors 22 angeordnet. Der Außenrotor 22 erstreckt sich zumindest teilweise über den Spalttopf 10 und wirkt mit dem Innenrotor 17 zusammen, derart, dass der rotierende Außenrotor 22 mittels magnetischer Kräfte den Innenrotor 17 und somit die Laufradwelle 13 und das Laufrad 16 ebenfalls in eine Rotationsbewegung versetzt.

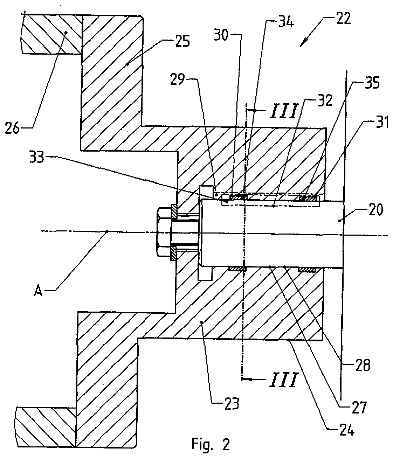

Der in der Fig. 2 vergrößert dargestellte Außenrotor 22 umfasst eine Nabe 23 mit einer glatten Außenmantelfläche 24, ein an der dem Spalttopf 10 zugewandten Seite der Nabe 23 ausgebildetes oder angeordnetes flanschartiges erstes Trägerelement 25 und ein an dem ersten Trägerelement 25 ausgebildetes oder angeordnetes hohlzylinderartiges zweites Trägerelement 26, das zumindest teilweise den Spalttopf 10 umgibt und an dem die Magnete 21 angeordnet sind. Erstes und zweites Trägerelement 25, 26 sind als zwei miteinander verbindbare Teile dargestellt, können aber auch als ein Teil hergestellt werden.

Durch die Nabe 23 erstreckt sich eine Durchgangsbohrung 27 und bildet eine Nabeninnenfläche 28. In der Nabeninnenfläche 28 ist eine sich parallel zur Drehachse A erstreckende Axialnut 29 ausgebildet. Ferner ist an der dem ersten Trägerelement 25 nahen Seite wenigstens eine radial an der Nabeninnenfläche 28 umlaufende erste Nut 30 und an der dem ersten Trägerelement 25 fernen Seite wenigstens eine radial an der Nabeninnenfläche 28 umlaufende zweite Nut 31 ausgebildet. Bei der gezeigten Darstellung haben erste und zweite Nut 30, 31 die gleichen Abmessungen. Bei Bedarf können die Abmessungen verschieden gewählt werden. Mindestens eine erste Nut 30 ist in einem Bereich der Nabeninnenfläche 28 ausgebildet, der sich in Axialrichtung im Wesentlichen zwischen der Mitte der Nabe 23 und dem ersten Trägerelement 25 befindet. Mindestens eine zweite Nut 31 ist in einem Bereich der Nabeninnenfläche 28 ausgebildet, der sich im Wesentlichen von der Mitte der Nabe 23 bis nahe an das dem ersten Trägerelement 25 entgegengesetzte Ende der Nabe 23 erstreckt. In der Antriebswelle 20 ist eine zur Axialnut 29 hin ausgerichtete Passfedernut 32 ausgebildet, in die zur Übertragung des Motordrehmoments auf die Nabe 23 des Außenrotors 22 eine Passfeder 33 eingesetzt ist. In der Fig. 2 befindet sich in der ersten Nut 30 ein Toleranzring 34 und in der zweiten Nut 31 ein Toleranzring 35. Bei der Verwendung von mehreren ersten bzw. zweiten Nuten 30, 31 ist in mindestens einer oder mehreren der ersten Nuten 30 und in einer oder mehreren der zweiten Nuten 31 ein Toleranzring 34, 35 angeordnet. Insbesondere ist in genau einer der ersten Nuten 30 ein Toleranzring 34 und in genau einer der zweiten Nuten 31 ein Toleranzring 35 angeordnet.

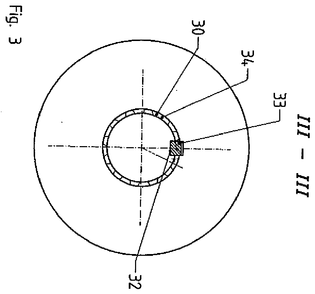

Wie aus der Fig. 3 ersichtlich, ist der in der ersten Nut 30 angeordnete Toleranzring 34 derart bemessen, dass dieser nicht in die die Passfeder 33 aufnehmende Passfedernut 32 hineinreicht. Dies gilt entsprechend für den in der zweiten Nut 31 angeordneten Toleranzring 35. Je nach Größe der Passfedernut 32 umspannt der Toleranzring 34 einen Winkel von etwa 300° bis etwa 320°. Gleiches gilt für den Toleranzring 35. Im Übrigen sind die Toleranzringe 34, 35 so dimensioniert, dass ein Kippen des Außenrotors 22 innerhalb des noch vorhandenen Passungsspieles zwischen Nabe 23 und Antriebswelle 20 vermieden wird. Die Federkraft der Toleranzringe 34, 35 entspricht mindestens der Gewichtskraft des auskragenden Außenrotors 22 und einer Fliehkraft, welche sich aus einer Unwucht des Außenrotors 22 ergibt. Die Kräfte stehen im Verhältnis des Abstandes der Toleranzringe 34, 35 und den Hebelarmen aus Gewichtskraft und Fliehkraft.

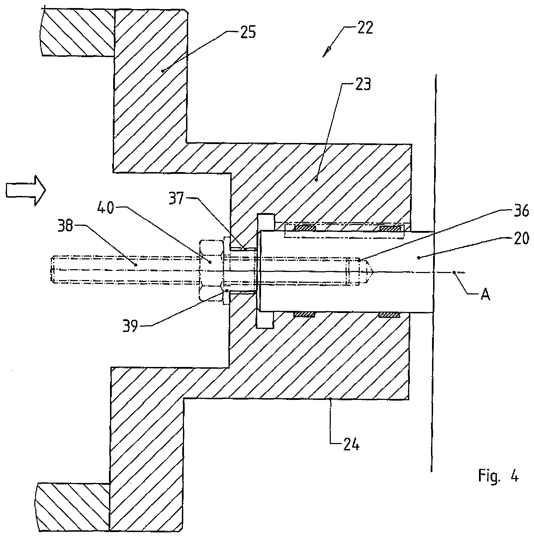

Die Fig. 4 zeigt eine mögliche Montage der Nabe 23 auf die Antriebswelle 20. Es ist erkennbar, dass am freien Ende der Antriebswelle 20 ein Gewindesackloch 36 konzentrisch zur Drehachse A vorgesehen ist. In dem Außenrotor 22 ist im Bereich des ersten Trägerelements 25 eine ebenfalls konzentrisch zur Drehachse A ausgebildete Gewindebohrung 37 vorgesehen. Die Gewindebohrung 37 weist dabei einen größeren Durchmesser auf als das Gewindesackloch 36. Zur Montage des Außenrotors 22 auf die Antriebswelle 20, wird zuerst eine Stiftschraube 38 in das Gewindesackloch 36 geschraubt. Danach wird die Nabe 23 des Außenrotors 22 auf die Antriebswelle 20 gesetzt, wobei sich die Stiftschraube 38 durch die Gewindebohrung 37 erstreckt. Eine Unterlegscheibe 39 wird über die Stiftschraube 38 bis zur Anlage an den Außenrotor 22 geschoben. Mittels einer auf die Stiftschraube 38 aufgeschraubten Schraubenmutter 40 wird die Nabe 23 des Außenrotors 22 auf die Antriebswelle 20 geschoben. Da auf Bohrungen, Unterbrechungen oder Schlitze in oder an der Außenmantelfläche 24 der Nabe 23 verzichtet wird, ist diese glatt, das heißt gleich- oder ebenmäßig, ausgebildet und es ist möglich, den Außenrotor 22 auf die Antriebswelle 20 zu schieben, ohne dass in diesem Bereich angeordnete, jedoch nicht gezeigte Dichtungselemente, beispielsweise Wellendichtringe, beschädigt werden.

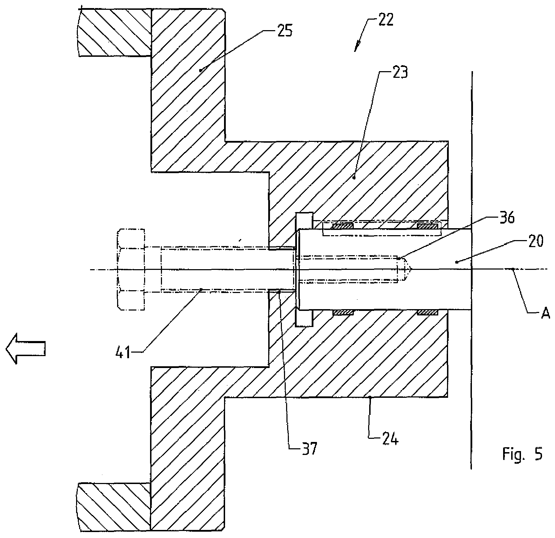

Wie aus der Fig. 5 ersichtlich, wird zum Abziehen des Außenrotors 22 eine Schraube 41 in die Gewindebohrung 37 bis zur Anlage an die Antriebswelle 20 geschraubt. Durch weiteres Hineindrehen der Schraube 41 in die Gewindebohrung 37 wird der Außenrotor 22 mit seiner Nabe 23 von der Antriebswelle 20 abgezogen.

**Bezugszeichenliste**

| | | | |
|---|---|---|---|
| 1 | Pumpenanordnung | 27 | Durchgangsbohrung |
| 2 | Gehäuse | 28 | Nabeninnenfläche |
| 3 | Hydraulikgehäuse | 29 | Axialnut |
| 4 | Gehäusedeckel | 30 | erste Nut |
| 5 | Lagerträgerlaterne | 31 | zweite Nut |
| 6 | Verbindungselement | 32 | Passfedernut |
| 7 | Einlassöffnung | 33 | Passfeder |
| 8 | Auslassöffnung | 34 | Toleranzring |
| 9 | Antriebsmotor | 35 | Toleranzring |
| 10 | Spalttopf | 36 | Gewindesackloch |
| 11 | Innenraum | 37 | Gewindebohrung |
| 12 | Kammer | 38 | Stiftschraube |
| 13 | Laufradwelle | 39 | Unterlegscheibe |
| 13a | Wellenabschnitt | 40 | Schraubenmutter |
| 13b | Wellenabschnitt | 41 | Schraube |
| 14 | Strömungskammer | | |
| 15 | Öffnung | A | Drehsachse |
| 16 | Laufrad | | |
| 17 | Innenrotor | | |
| 18 | Magnet | | |
| 19 | Lageranordnung | | |
| 20 | Antriebswelle | | |
| 21 | Magnet | | |
| 22 | Außenrotor | | |
| 23 | Nabe | | |
| 24 | Außenmantelfläche | | |
| 25 | erstes Trägerelement | | |
| 26 | zweites Trägerelement | | |

## Patentansprüche

1. Magnetkupplungspumpenanordnung (1) mit einem von einem Pumpengehäuse (2) der Pumpenanordnung (1) gebildeten Innenraum (11), einem Spalttopf (10), der eine von ihm umschlossene Kammer (12) hermetisch gegenüber dem vom Pumpengehäuse (2) gebildeten Innenraum (11) abdichtet, einer um eine Drehachse (A) drehbar antreibbaren Laufradwelle (13), einem an einem Ende der Laufradwelle (13) angeordneten Laufrad (16), einem an dem anderen Ende der Laufradwelle (13) angeordneten Innenrotor (17), einem Antriebsmotor (9), einer von dem Antriebsmotor (9) drehbar um die Drehachse (A) antreibbaren Antriebswelle (20) und einem auf der Antriebswelle (20) angeordneten, mit dem Innenrotor (17) zusammenwirkenden Außenrotor (22), wobei der Außenrotor (22) eine Nabe (23) mit einer durch eine Durchgangsbohrung (27) gebildeten Nabeninnenfläche (28) aufweist, in der eine sich parallel zur Drehachse (A) erstreckende und mit einer in einer Passfedernut (32) der Antriebswelle (20) eingesetzten Passfeder (33) zusammenwirkende Axialnut (29) ausgebildet ist, **dadurch gekennzeichnet, dass**
in der Nabeninnenfläche (28) mindestens eine radial umlaufende erste Nut (30) und mindestens eine radial umlaufende zweite Nut (31) ausgebildet ist, wobei wenigstens in zwei der Nuten (30, 31) ein Toleranzring (34, 35) angeordnet ist.

2. Pumpenanordnung nach Anspruch 1, **dadurch gekennzeichnet, dass** in mindestens einer oder mehreren der ersten Nuten (30) und in einer oder mehreren der zweiten Nuten (31) ein Toleranzring (34, 35) angeordnet ist.

3. Pumpenanordnung nach Anspruch 2, **dadurch gekennzeichnet, dass** in einer der ersten Nuten (30) ein Toleranzring (34) und in einer der zweiten Nuten (31) ein Toleranzring (35) angeordnet ist.

4. Pumpenanordnung nach einem der Ansprüche 1, 2 oder 3, **dadurch gekennzeichnet, dass** die Pumpenanordnung (1) in einer Blockausführung ausgestaltet ist.

5. Pumpenanordnung nach einem der Ansprüche 1 bis 4, **dadurch gekennzeichnet, dass** wenigstens eine erste Nut (30) in einem Bereich der Nabeninnenfläche (28) ausgebildet ist, der sich in Axialrichtung im Wesentlichen zwischen der Mitte der Nabe (23) und einem ersten Trägerelement (25) befindet, und dass wenigstens eine zweite Nut (31) in einem Bereich der Nabeninnenfläche (28) ausgebildet ist, der sich im Wesentlichen von der Mitte der Nabe (23) bis nahe an das dem ersten Trägerelement (25) entgegengesetzte Ende der Nabe (23) erstreckt.

6. Pumpenanordnung nach einem der Ansprüche 1 bis 5, **dadurch gekennzeichnet, dass** die Außenmantelfläche (24) der Nabe (23) glatt ausgebildet ist.

7. Pumpenanordnung nach einem der Ansprüche 1 bis 6, **dadurch gekennzeichnet, dass** in dem Außenrotor (22) eine im Bereich des ersten Trägerelements (25) ausgebildete Gewindebohrung (37) vorgesehen ist.

8. Pumpenanordnung nach Anspruch 7, **dadurch gekennzeichnet, dass** die Gewindebohrung (37) einen größeren Durchmesser aufweist als ein in der Antriebswelle (20) vorgesehenes Gewindesackloch (36).

9. Pumpenanordnung nach einem der Ansprüche 1 bis 8, **dadurch gekennzeichnet, dass** die Toleranzringe (34, 35) derart bemessen sind, dass diese nicht in die die Passfeder (33) aufnehmende Passfedernut (32) hineinreichen.

## Claims

1. Magnetically coupled pump arrangement (1) having an interior space (11) which is formed by a pump casing (2) of the pump arrangement (1), a split can (10) which hermetically seals a chamber (12) which is enclosed by it with respect to the interior space (11) which is formed by the pump casing (2), an impeller shaft (13) which can be driven rotatably about a rotational axis (A), an impeller (16) which is arranged at one end of the impeller shaft (13), an internal rotor (17) which is arranged at the other end of the impeller shaft (13), a drive motor (9), a drive shaft (20) which can be driven rotatably about the rotational axis (A) by the drive motor (9), and an external rotor (22) which is arranged on the drive shaft (20) and interacts with the internal rotor (17), the external rotor (22) having a hub (23) with a hub inner face (28) which is formed by way of a through-bore (27) and in which an axial groove (29) is configured which extends parallel to the rotational axis (A) and interacts with a feather key (33) which is inserted into a feather key groove (32) of the drive shaft (20), **characterized in that** at least one radially circumferential first groove (30) and at least one radially circumferential second groove (31) are configured in the hub inner face (28), a tolerance ring (34, 35) being arranged at least in two of the grooves (30, 31).

2. Pump arrangement according to Claim 1, **characterized in that** a tolerance ring (34, 35) is arranged in at least one or more of the first grooves (30) and in one or more of the second grooves (31).

3. Pump arrangement according to Claim 2, **characterized in that** a tolerance ring (34) is arranged in one of the first grooves (30), and a tolerance ring (35) is arranged in one of the second grooves (31).

4. Pump arrangement according to one of Claims 1, 2 or 3, **characterized in that** the pump arrangement (1) is configured in a close-coupled design.

5. Pump arrangement according to one of Claims 1 to 4, **characterized in that** at least one first groove (30) is configured in a region of the hub inner face (28) which is situated in the axial direction substantially between the centre of the hub (23) and a first carrier element (25), and **in that** at least one second groove (31) is configured in a region of the hub inner face (28) which extends substantially from the centre of the hub (23) as far as close to that end of the hub (23) which is opposed to the first carrier element (25).

6. Pump arrangement according to one of Claims 1 to 5, **characterized in that** the outer circumferential face (24) of the hub (23) is of smooth configuration.

7. Pump arrangement according to one of Claims 1 to 6, **characterized in that** a threaded bore (37) which is configured in the region of the first carrier element (25) is provided in the external rotor (22).

8. Pump arrangement according to Claim 7, **characterized in that** the threaded bore (37) has a greater diameter than a threaded blind hole (36) which is provided in the drive shaft (20).

9. Pump arrangement according to one of Claims 1 to 8, **characterized in that** the tolerance rings (34, 35) are dimensioned in such a way that they do not reach into the feather key groove (32) which receives the feather key (33).

## Revendications

1. Agencement de pompe à accouplement magnétique (1) avec une chambre intérieure (11) formée par un carter de pompe (2) de l'agencement de pompe (1), avec un pot d'entrefer (10) étanchéifiant un compartiment (12) entouré par lui de façon hermétique par rapport à la chambre intérieure (11) formée par le carter de pompe (2), avec un arbre de roue de roulement (13) pouvant être entraîné de façon à pouvoir tourner autour d'un axe de rotation (A), avec une roue de roulement (16) disposée au niveau d'une extrémité de l'arbre de roue de roulement (13), avec un rotor intérieur (17) disposé au niveau de l'autre extrémité de l'arbre de roue de roulement (13), avec un moteur d'entraînement (9), avec un arbre d'entraînement (20) pouvant être entraîné par le moteur d'entraînement (9) de façon à pouvoir tourner autour de l'axe de rotation (A) et avec un rotor extérieur (22) disposé sur l'arbre d'entraînement (20), interagissant avec le rotor intérieur (17), le rotor extérieur (22) comportant un moyeu (23) avec une surface intérieure de moyeu (28) formée par un alésage traversant (27) dans lequel une rainure axiale (29) s'étendant parallèlement à l'axe de rotation (A) et interagissant avec une clavette (33) insérée dans une rainure de clavette (32) de l'arbre d'entraînement (20) est réalisée, **caractérisé en ce qu'**au moins une première rainure (30) périphérique dans le plan radial et au moins une deuxième rainure (31) périphérique dans le plan radial est réalisée dans la surface intérieure de moyeu (28), une bague de tolérance (34, 35) étant disposée au moins dans deux des rainures (30, 31).

2. Agencement de pompe selon la revendication 1, **caractérisé en ce qu'**une bague de tolérance (34, 35) est disposée dans au moins une ou plusieurs des premières rainures (30) et dans une ou plusieurs des deuxième rainures (31).

3. Agencement de pompe selon la revendication 2, **caractérisé en ce qu'**une bague de tolérance (34) est disposée dans une des premières rainures (30) et qu'une bague de tolérance (35) est disposée dans une des deuxièmes rainures (31).

4. Agencement de pompe selon l'une quelconque des revendications 1, 2 ou 3, **caractérisé en ce que** l'agencement de pompe (1) est configuré à la façon d'un bloc.

5. Agencement de pompe selon l'une quelconque des revendications 1 à 4, **caractérisé en ce qu'**au moins une première rainure (30) est réalisée dans une région de la surface intérieure de moyeu (28) se trouvant, dans la direction axiale, pour l'essentiel entre le centre du moyeu (23) et un premier élément de support (25) et qu'au moins une deuxième rainure (31) est réalisée dans une région de la surface intérieure de moyeu (28) s'étendant pour l'essentiel du centre du moyeu (23) jusqu'à approximativement l'extrémité, opposée au premier élément de support (25), du moyeu (23).

6. Agencement de pompe selon l'une quelconque des revendications 1 à 5, **caractérisé en ce que** la surface d'enveloppe extérieure (24) du moyeu (23) est réalisée de façon lisse.

7. Agencement de pompe selon l'une quelconque des revendications 1 à 6, **caractérisé en ce qu'**un alésage fileté (37) réalisé dans la région du premier élément de support (25) est prévu dans le rotor extérieur (22).

8. Agencement de pompe selon la revendication 7, **caractérisé en ce que** l'alésage fileté (37) présente un diamètre supérieur à un trou borgne fileté (36) prévu dans l'arbre d'entraînement (20).

9. Agencement de pompe selon l'une quelconque des revendications 1 à 8, **caractérisé en ce que** les bagues de tolérance (34, 35) sont dimensionnées de telle sorte qu'elles ne vont pas jusqu'à la rainure de clavette (32) recevant la clavette (33).
